(19) Europäisches Patentamt
European Patent Office
Office européen des brevets

(11) Veröffentlichungsnummer: **0 544 147 A1**

# (12) EUROPÄISCHE PATENTANMELDUNG

(21) Anmeldenummer: **92119258.9**

(22) Anmeldetag: **11.11.92**

(51) Int. Cl.5: **C08L 67/02**, C08L 33/12, C08K 7/04, //(C08L67/02,33:12), (C08L33/12,67:02)

(30) Priorität: **23.11.91 DE 4138574**

(43) Veröffentlichungstag der Anmeldung: **02.06.93 Patentblatt 93/22**

(84) Benannte Vertragsstaaten: **BE DE ES FR GB NL**

(71) Anmelder: **BASF Aktiengesellschaft**
**Carl-Bosch-Strasse 38**
**W-6700 Ludwigshafen(DE)**

(72) Erfinder: **Bright, Theresa, Dr.**
**Stephanienufer 19**
**W-6800 Mannheim 1(DE)**
Erfinder: **Deckers, Andreas, Dr.**
**Eschenbachstrasse 48**
**W-6700 Ludwigshafen(DE)**
Erfinder: **Knoll, Manfred**
**Pfrimmstrasse 1**
**W-6521 Wachenheim(DE)**

## (54) Thermoplastische Formmassen auf der Basis von thermoplastischen Polyestern und Methylmethacrylatpolymerisaten.

(57) Thermoplastische Formmassen, enthaltend als wesentliche Komponenten
A) 30 bis 94 Gew.-% eines thermoplastischen Polyesters
B) 3 bis 35 Gew.-% eines Methylmethacrylathomo- oder copolymerisats
und
C) 3 bis 40 Gew.-% faserförmige Verstärkungsmittel.

EP 0 544 147 A1

Die vorliegende Erfindung betrifft thermoplastische Formmassen, enthaltend als wesentliche Komponenten

A) 30 bis 94 Gew.-% eines thermoplastischen Polyesters

B) 3 bis 35 Gew.-% eines Methylmethacrylathomo- oder -copolymerisats

und

C) 3 bis 40 Gew.-% faserförmige Verstärkungsmittel.

Außerdem betrifft die Erfindung die Verwendung dieser thermoplastischen Formmassen zur Herstellung von Fasern, Folien und Formkörpern sowie die hierbei erhältlichen Formkörper aus den thermoplastischen Formmassen.

Thermoplastische Polyester werden in vielen unterschiedlichen Bereichen verwendet, z. B. im Automobilbereich, zur Herstellung von Gehäusen für Elektrogeräte oder im Bausektor.

In der EP-A 287 245 sind Mischungen aus thermoplastischen Polyestern und Acrylatpolymerisaten beschrieben, deren mechanische Eigenschaften, insbesondere die Schlagzähigkeit, und deren Oberflächenqualitäten, insbesondere die Kratzfestigkeit nicht zufriedenstellend sind.

Der vorliegenden Erfindung lag daher die Aufgabe zugrunde, Polyesterformmassen zur Verfügung zu stellen, die die genannten Nachteile nicht aufweisen.

Demgemäß wurden die eingangs definierten thermoplastischen Formmassen gefunden. Außerdem wurden deren Verwendung zur Herstellung von Fasern, Folien und Formkörpern sowie die hierbei erhältlichen Formkörper aus den thermoplastischen Formmassen gefunden.

Als Komponente A) enthalten die erfindungsgemäßen thermoplastischen Formmassen 30 bis 94 Gew.-%, bevorzugt 40 bis 90 Gew.-%, insbesondere 45 bis 75 Gew.-% eines thermoplastischen Polyesters.

Derartige Polyester sind an sich bekannt. Vorzugsweise werden Polyester verwendet, die einen aromatischen Ring in der Hauptkette enthalten. Der aromatische Ring kann auch substituiert sein, z. B. durch Halogen, wie Chlor und Brom und/oder durch $C_1$- bis $C_4$-Alkylgruppen, wie z. B. Methyl-, Ethyl-, i- bzw. n-Propyl- und i- bzw. n- bzw. t-Butylgruppen.

Die Herstellung der Polyester kann durch Reaktion von Dicarbonsäuren, deren Ester oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Napththalindicarbonsäuren, Terephthalsäure, Isophthalsäure, Adipinsäure, Azelainsäure, Sebacinsäure, Dodecandisäure und Cyclohexandicarbonsäuren, $C_{36}$-Dimerfettsäuren, Mischungen dieser Carbonsäuren und esterbildende Derivate derselben genannt.

Als Dihydroxyverbindungen werden vorzugsweise Diole mit 2 bis 10 C-Atomen, besonders bevorzugt Ethylenglykol, 1,3-Propandiol, 1,4-Butandiol, 1,4-Butendiol und 1,6-Hexandiol verwendet; es können jedoch auch 1,4-Hexandiol, 1,4-Cyclohexandiol, 1,4-Di(hydroxymethyl)cyclohexan, Bisphenol A, Neopentylglykol, Mischungen dieser Diole sowie esterbildende Derivate derselben eingesetzt werden.

Polyester aus Terephthalsäure oder Naphthalindicarbonsäuren und einer $C_2$- bis $C_6$-Diolkomponente, z. B. Polyethylenterephthalat, Polyethylennaphthalat, Polypropylenterephthalat oder Polybutylenterephthalat oder deren Mischungen werden besonders bevorzugt.

Werden Mischungen verschiedener Polyester eingesetzt, so können die Mischungsverhältnisse in weiten Bereichen schwanken. Bevorzugt sind Mischungen aus Polybutylenterephthalat und Polyethylenterephthalat, wobei das Gewichtsverhältnis vorzugsweise im Bereich von 3:1 bis 7:1 liegt.

Weiterhin hat es sich als besonders bevorzugt erwiesen, wenn Polybutylenterephthalate mit einer Viskositätszahl von mindestens 50 ml/g, gemessen an einer 0,5 gew.-%igen Lösung in Phenol/o-Dichlorbenzol (Gew.-Verhältnis 1:1) bei 25 °C, eingesetzt werden.

Selbstverständlich können auch Polyesterblockcopolymere wie Copolyetherester verwendet werden. Derartige Produkte sind an sich bekannt und in der Literatur, z. B. in der US-A 3 651 014, beschrieben. Auch im Handel sind entsprechende Produkte erhältlich, z.B. Hytrel® (Du Pont).

Die als Komponente B) verwendeten Methylmethacrylathomo- oder copolymerisate werden in Mengen von 3 bis 35 Gew.-%, vorzugsweise 5 bis 30 Gew.-% eingesetzt.

Bevorzugt wird ein Copolymerisat aus Methylmethacrylat und bis zu 20 Gew.-% eines vinylgruppenhaltigen Monomeren eingesetzt.

Solche vinylgruppenhaltigen Comonomere können Acrylate, Methacrylate, (Meth)acrylnitril, Styrol und dessen Derivate, Vinylcarboxylate, Maleinsäure, Maleinsäureanhydrid sowie Acrylsäure und Methacrylsäure und deren Amide oder Imide sein. Bevorzugt sind Acrylate und Methacrylate mit $C_1$- bis $C_4$-Alkyl-, $C_5$- bis $C_8$-Cycloalkyl-, oder alkylaromatischen sowie halogenierten $C_1$- bis $C_2$-Alkyl-Resten wie Methyl(meth)acrylat, Ethyl(meth)acrylat, n-Propyl(meth)acrylat, n-Butyl(meth)acrylat, Cyclopentyl(meth)acrylat, Cyclohexyl(meth)acrylat, Phenyl(meth)acrylat, Ethylphenyl(meth)acrylat, Benzyl(meth)acrylat, Trifluormethyl-

(meth)acrylat.

Die Herstellung der Komponente B) führt man im allgemeinen in an sich bekannter Weise beispielsweise in Substanz, Lösung, Suspension oder Emulsion durch. Bei der Herstellung durch Substanzpolymerisation kann man öllösliche Initiatoren (Radikalstarter wie Diacylperoxide, Perester, Peroxydicarbonate, Hydroperoxide, Dialkylperoxide oder Azoverbindungen wie Azo-bis-isobutyronitril verwenden. Die Polymerisationstemperatur liegt im allgemeinen im Bereich von 20 bis 200°C, bevorzugt von 60 bis 160°C. Das Molekulargewicht kann man durch geeignete Kettenüberträger, beispielsweise Mercaptane, oder durch eine geeignete Temperaturführung regulieren. Im allgemeinen wählt man Molekulargewichte im Bereich von 20.000 bis 500.000, bevorzugt von 50.000 bis 150.000 g/mol (Gewichtsmittelwert des Molekulargewichts).

Die Herstellung der Polymerisate kann auch durch Lösungspolymerisation erfolgen. Geeignete Lösungsmittel sind beispielsweise Toluol, Xylol, Aceton oder Tetrahydrofuran. Im übrigen kann man die Polymerisation unter den für die Substanzpolymerisation geschilderten Bedingungen durchführen.

Die Herstellung der Polymerisate durch Suspensionspolymerisation führt man in der Regel in Gegenwart von Schutzkolloiden wie Polyvinylpyrrolidon, Polymethacrylsäure, Polyvinylalkohol oder Methylcellulose durch.

Als Initiatoren kann man in der Regel die für die Substanzpolymerisation beschriebenen öllöslichen Radikalstarter einsetzen. Die Reaktionstemperatur wählt man hierbei im allgemeinen im Bereich von 60 bis 160°C.

Bei der Herstellung durch Emulsionspolymerisation führt man die Reaktion zweckmäßigerweise bei Temperaturen im Bereich von 20 bis 120°C durch. Als Initiatoren kann man thermisch zerfallende wasserlösliche Initiatoren wie Natriumperoxodisulfat oder Ammoniumperoxodisulfat oder auch Redox-Systeme wie tert.-Butylhydroperoxid/Natriumformaldehydsulfoxylat verwenden. Als Emulgatoren setzt man in der Regel die üblichen Verbindungen ein, wie die Alkalimetallsalze von Fettsäuren, Natriumalkylsulfonate oder o-Dodecyldiphenyletherdisulfonat.

Nähere Ausführungen hierzu finden sich beispielsweise in Kunststoff-Handbuch, Band IX, "Polymethacrylate", Carl Hanser Verlag, München, 1975, S. 15 - 22, 31 - 39).

Als Komponente C) enthalten die erfindungsgemäßen thermoplastischen Formmassen 3 bis 35 Gew.-%, bevorzugt 10 bis 30 Gew.-%, insbesondere 15 bis 25 Gew.-% faserförmige Verstärkungsmittel.

Unter faserförmigen Verstärkungsmitteln seien Glasfasern, Kohlenstoff-Fasern, Aramid-Fasern, Kaliumtitanatfasern und faserförmige Silikate wie Wollastonit genannt.

Bei der Verwendung von Glasfasern können diese zur besseren Verträglichkeit mit einer Schlichte und einem Haftvermittler ausgerüstet sein.

Bevorzugt werden Glasfasern eingesetzt.

Im allgemeinen haben die verwendeten Glasfasern einen Durchmesser im Bereich von 6 bis 20 mm. Die Einarbeitung kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 5 mm.

Darüber hinaus können die erfindungsgemäßen thermoplastischen Formmassen 0 bis 40 Gew.-%, vorzugsweise 0 bis 30 Gew.-% teilchenförmige Füllstoffe enthalten.

Als teilchenförmige Füllstoffe seien hier nur stellvertretend Glaskugeln, teilchenförmiger Wollastonit, Quarzmehl, Bornitrid, Kaolin, Calciumcarbonat, Glimmer, Magnesiumcarbonat und Titandioxid genannt, wovon Wollastonit, Titandioxid und Kaolin im allgemeinen bevorzugt werden.

Weiterhin können die erfindungsgemäßen Formmassen übliche Zusatzstoffe und Verarbeitungshilfsmittel enthalten. Deren Anteil beträgt i.a. 0 bis 30 Gew.-%, vorzugsweise 0 bis 10 Gew.-%.

Übliche Zusatzstoffe sind beispielsweise UV-Stabilisatoren, Gleit- und Entformungsmittel, Färbemittel, Farbstoffe und Pigmente und Weichmacher sowie Flammschutzmittel.

Beispiele für UV-Stabilisatoren sind verschiedene substituierte Thioester, Resorcine, Salicylate, Benzotriazole und Benzophenone, die im allgemeinen in Mengen bis zu 2,0 Gew.-% eingesetzt werden.

Gleit- und Entformungsmittel, die in der Regel in Mengen bis zu 1 Gew.-% der thermoplastischen Masse zugesetzt werden, sind Stearinsäuren, Stearylalkohol, Stearinsäurealkylester und -amide sowie Ester des Pentaerythrits mit langkettigen Fettsäuren.

Flammschutzmittel können im allgemeinen in Mengen bis zu 20 Gew.-% in den Formmassen enthalten sein. Es kommen hierbei alle für Polyester bekannten Flammschutzzusätze in Betracht, bevorzugt sind jedoch Ethylen-bis-tetrabromphthalimid und oligomere Tetrabrombisphenol A-Carbonate.

Die Flammschutzmittel können gegebenenfalls gemeinsam mit einem Synergisten eingesetzt werden, wobei Metalloxide, Metallborate oder deren Mischungen bevorzugt sind. Als Metalloxide sind allgemein Zinkoxide, Bleioxide, Eisenoxide, Aluminiumoxide, Zinnoxide, Magnesiumoxide oder deren Mischungen geeignet. Bevorzugt sind Antimontrioxid und Antimonpentoxid sowie deren Mischungen. Geeignete Metallborate sind Borate von Metallen der 1. bis 3. Hauptgruppe des Periodensystems sowie der 1. bis 8. Nebengruppe, wobei wasserfreie Zinkborate bevorzugt sind. Bevorzugt wird eine Mischung aus Antimontrioxid mit wasserfreiem Zinkborat verwendet. Die Menge an Synergisten liegt in der Regel im Bereich von 0 bis 30 Gew.-%, bezogen auf die thermoplastische Formmasse.

Die erfindungsgemäßen thermoplastischen Formmassen können noch 0 bis 30 Gew.-% eines Styrol-Acrylnitril-Copolymerisats enthalten.

In der Regel setzt man ein Copolymerisat, aufgebaut aus
8 bis 30 Gew.-%, bevorzugt 15 bis 25 Gew.-%, besonders bevorzugt 18 bis 22 Gew.-% Acrylnitril,
70 bis 92 Gew.-%, bevorzugt 75 bis 85 Gew.-%, besonders bevorzugt 78 bis 82 Gew.-% Styrol und/oder substituierte Styrole und
0 bis 22 Gew.-% mindestens eines weiteren Monomeren
ein.

Neben Styrol kann man dessen einfach oder mehrfach kernsubstituierte Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol und $\alpha$-Methylstyrol einsetzen. Man verwendet dabei besonders bevorzugt Styrol.

Als weitere Monomere kann man beispielsweise $C_1$- bis $C_8$-Alkyl(meth)acrylate wie Methylacrylat, Ethylacrylat, n-Propylacrylat, n-Butylacrylat, n-Pentylacrylat, n-Hexylacrylat, n-Heptylacrylat, n-Octylacrylat, Methylmethacrylat, Ethylmethacrylat, n-Propylmethacrylat, n-Butylmethacrylat, tert.-Butylmethacrylat, n-Pentylmethacrylat, n-Hexylmethacrylat, bevorzugt Methylacrylat, Ethylacrylat, Methylmethacrylat, sowie Cyclohexyl(meth)acrylat, Maleinsäureanhydrid, Maleinsäureimide einsetzen.

Die Herstellung der Styrol-Acrylnitril-Copolymerisate führt man in der Regel nach bekannten Methoden durch, beispielsweise nach den Lehren der DE-AS 1 001 001 und DE-PS 1 003 436, so daß sich nähere Angaben hierzu erübrigen. Dabei wählt man den Bereich der Molekulargewichte im allgemeinen von 10.000 bis 500.000, bevorzugt von 50.000 bis 250.000.

Weiterhin können die erfindungsemäßen thermoplastischen Formmassen 0 bis 60, vorzugsweise 0 bis 40 Gew.-% eines schlagzäh modifizierenden Polymeren (im folgenden auch als kautschukelastisches Polymerisat oder Elastomer bezeichnet) enthalten.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien-5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl-(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$$R^1C(COOR^2) = C(COOR^3)R^4 \qquad (I)$$

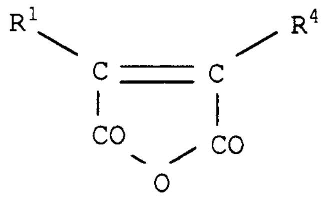

(II)

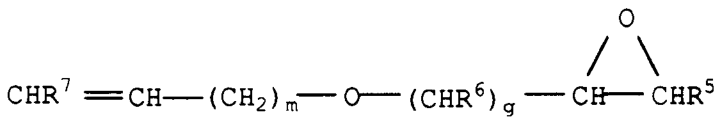

(III)

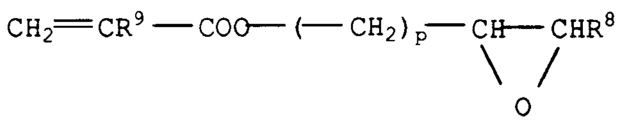

(IV)

wobei $R^1$ bis $R^9$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste $R^1$ bis $R^9$ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

50 bis 98, insbesondere 55 bis 95 Gew.-% Ethylen,

0,1 bis 40, insbesondere 0,3 bis 20 Gew.-% Glycidylacrylat und/oder Glycidylmethacrylat, (Meth)-acrylsäure und/oder Maleinsäureanhydrid, und

1 bis 45, insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

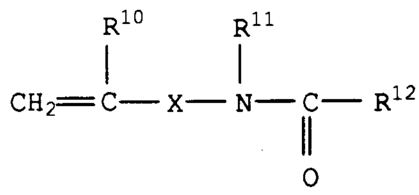

eingeführt werden können,
wobei die Substituenten folgende Bedeutung haben können:

- $R^{10}$ Wasserstoff oder eine $C_1$- bis $C_4$-Alkylgruppe,
- $R^{11}$ Wasserstoff, eine $C_1$- bis $C_8$-Alkylgruppe oder eine Arylgruppe, insbesondere Phenyl,
- $R^{12}$ Wasserstoff, eine $C_1$- bis $C_{10}$-Alkyl-, eine $C_6$- bis $C_{12}$-Arylgruppe oder $-OR^{13}$
- $R^{13}$ eine $C_1$- bis $C_8$-Alkyl- oder $C_6$- bis $C_{12}$-Arylgruppe, die gegebenenfalls mit O- oder N-haltigen Gruppen substituiert sein können,
- X eine chemische Bindung, eine $C_1$- bis $C_{10}$-Alkylen- oder $C_6$-$C_{12}$-Arylengruppe oder

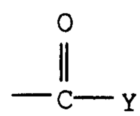

- Y O-Z oder NH-Z und
- Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf die schlagzäh modifizierenden Polymeren.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Kommerziell im Handel sind solche Produkte z.B. unter den Bezeichnungen Desmopan® (Bayer AG) oder Elastollan® (Elastogran Polyurethane GmbH) erhältlich.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290 °C.

Die erfindungsgemäßen thermoplastischen Formmassen zeichnen sich durch gute mechanische Eigenschaften aus, weisen eine sehr gute Oberflächenqualität auf und hohe Kratzfestigkeit. Sie eignen sich zur Herstellung von Fasern, Folien und Formkörpern.

Beispiele

Es wurden folgende Komponenten eingesetzt:

A1: Ein Polybutylenterephthalat mit einem mittleren Molekulargewicht $\overline{M}_n$ (Zahlenmittelwert) von 25 000 und einer Viskositätszahl von 125 ml/g (gemessen an einer 0,5 gew.-%igen Lösung in Phenol/o-Dichlorbenzol (Gewichtsverhältnis 1:1)) (Ultradur® B 4500 der BASF AG)

A2: Ein Polyethylenterephthalat mit einem mittleren Molekulargewicht $\overline{M}_n$ (Zahlenmittelwert) von 30 000 und einer Viskositätszahl von 73 ml/g (gemessen an einer 0,5 gew.-%igen Lösung in Phenol/o-Dichlorbenzol (Gew.-Verhältnis 1:1)) (Ultralen® SP 3700 S der BASF AG)

B: Ein Methylmethacrylatcopolymerisat aus 99 Gew.-% Methylmethacrylat und 1 Gew.-% Methylacrylat mit einer Viskositätszahl von 73 $cm^3/g$ (gemessen an einer 0,5 gew.-%igen Lösung in Chloroform bei 25 °C nach DIN 7745)

C: Schnittglasfasern mit einem Durchmesser von 10 µm und einer Faserlänge von 4,5 mm.

K: Ein Acrylatkautschuk aus 50 Gew.-% eines Styrol-Acrylnitril-Copolymerisats (65 Gew.-% Styrol, 35 Gew.-% Acrylnitril) und 50 Gew.-% eines Pfropfkautschuks, der aus 60 Gew.-% vernetztem n-Butylacrylat (Kern) und 40 Gew.-% Styrol-Acrylnitril-Polymerisat (Hülle; 75 Gew.-% Styrol, 25 Gew.-% Acrylnitril) aufgebaut ist.

Beispiele 1 bis 8

Herstellung der thermoplastischen Formmassen

Die Ausgangskomponenten wurden auf einem Zweiwellenextruder (ZSK 35 von Werner & Pfleiderer) bei 240 °C gemischt (25 kg/h Durchsatz, 250 U/min), extrudiert, gekühlt, granuliert, getrocknet und anschließend bei 260 °C zu Probekörpern verspritzt.

Vergleichsbeispiele V1 bis V3

Es wurde wie in den Beispielen 1 bis 8 gearbeitet, jedoch ohne den Zusatz eines Methylmethacrylathomo- oder copolymerisats (Komponente B)).

Die Zusammensetzungen und Eigenschaften der thermoplastischen Formmassen sind in der Tabelle zusammengestellt.

Die Bestimmung der Oberflächenqualität erfolgte visuell. Die Ermittlung der Kratzfestigkeit erfolgte mittels eines Reibwertmeßgeräts. Hierzu wird nach dem Auflegen des Prüfkörpers auf einem Meßtisch ein Meßstift mit konstanter Geschwindigkeit (8 mm/sec) und kontinuierlich ansteigender Auflagekraft über die Prüfkörperoberfläche bewegt (Meßweg 40 mm). Als Ergebnis erhält man die Reibkraft.

Der Elastizitätsmodul (E-Modul) wurde nach DIN 53 457 bestimmt, die Kerbschlagzähigkeit $a_k$ nach DIN 53 453 bei 23 °C.

Tabelle

| Bsp. | Zusammensetzung [Gew.-%] | | | | | Oberflächenqualität | Kratzfestigkeit [P] | E-Modul [N/mm²] | $a_k$ [kJ/m²] |
|---|---|---|---|---|---|---|---|---|---|
| | A1 | A2 | B | C | K | | | | |
| 1 | 49 | 10 | 10 | 20 | 11 | w* | 18,4 | 7383 | 3,9 |
| 2 | 49 | 10 | 21 | 20 | - | n* | 17,7 | 7898 | 3,5 |
| 3 | 59 | 10 | 21 | 10 | - | n | 15,9 | 5287 | 2,5 |
| 4 | 39 | 10 | 21 | 30 | - | n | 19,2 | 11538 | 4,4 |
| 5 | 59 | - | 10 | 20 | 11 | n | 20,4 | 7604 | 4,5 |
| 6 | 59 | - | 21 | 20 | - | n | 13,1 | 8052 | 3,9 |
| 7 | 56 | 10 | 24 | 10 | - | n | 16,5 | 5314 | 2,3 |
| 8 | 42 | 10 | 18 | 30 | - | n | 16,0 | 11495 | 4,4 |
| V1 | 49 | 10 | - | 20 | 21 | w | 18,9 | 7220 | 4,8 |
| V2 | 70 | 10 | - | 20 | - | s,r* | 14,7 | 7708 | 4,4 |
| V3 | 80 | - | - | 20 | - | s,r | 13,5 | 7825 | 4,6 |

*w ≙ Glasfasern wenig sichtbar
n ≙ Glasfasern nicht sichtbar
s ≙ Glasfasern sichtbar
r ≙ rauhe Oberfläche

**Patentansprüche**

1. Thermoplastische Formmassen, enthaltend als wesentliche Komponenten
   A) 30 bis 94 Gew.-% eines thermoplastischen Polyesters
   B) 3 bis 35 Gew.-% eines Methylmethacrylathomo- oder copolymerisats
   und
   C) 3 bis 40 Gew.-% faserförmige Verstärkungsmittel.

2. Verwendung der thermoplastischen Formmassen gemäß Anspruch 1 zur Herstellung von Fasern, Folien und Formkörpern.

3. Formkörper, erhältlich aus den thermoplastischen Formmassen gemäß Anspruch 1 als wesentliche Komponente.

Europäisches Patentamt

# EUROPÄISCHER RECHERCHENBERICHT

Nummer der Anmeldung

EP 92 11 9258
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN<br>vol. 3, no. 109 (C-58)12. September 1979<br>& JP-A-54 088 955 ( MITSUBISHI RAYON CO LTD ) 14. Juli 1979<br>* Zusammenfassung *<br>--- | 1-3 | C08L67/02<br>C08L33/12<br>C08K7/04<br>//<br>(C08L67/02, 33:12)<br>(C08L33/12, 67:02) |
| X | FR-A-2 154 800 (GENERAL ELECTRIC COMPANY)<br>* Ansprüche 1-3,9,11 *<br>* Seite 1, Absatz 1 *<br>* Seite 22, Absatz 2 *<br>--- | 1-3 | |
| X | GB-A-2 000 795 (GAF CORPORATION)<br>* Ansprüche 1-3,5,7-8 *<br>--- | 1-3 | |
| X | EP-A-0 185 103 (GENERAL ELECTRIC COMPANY)<br>* Ansprüche 1-2,6-7,12,18-19,21 *<br>* Seite 1, Absatz 1 *<br>--- | 1-3 | |
| A | PATENT ABSTRACTS OF JAPAN<br>vol. 10, no. 94 (C-338)(2151) 11. April 1986<br>& JP-A-60 226 546 ( ASAHI KASEI KOGYO KK ) 11. November 1985<br>* Zusammenfassung *<br>--- | 1-3 | **RECHERCHIERTE SACHGEBIETE (Int. Cl.5 )**<br>C08K<br>C08L |
| P,X | EP-A-0 457 918 (POLYPLASTICS CO. LTD.)<br>* Ansprüche 1-2,4,7 *<br>* Seite 4, Absatz 6 *<br>--- | 1-3 | |
| P,X | US-A-5 115 016 (V. DICKENS; ET AL)<br>* Spalte 2, Zeile 2 - Zeile 40 *<br>* Beispiele 1-2,5-6 *<br>--- | 1-3 | |

-/--

Der vorliegende Recherchenbericht wurde für alle Patentansprüche erstellt

| Recherchenort | Abschlußdatum der Recherche | Prüfer |
|---|---|---|
| DEN HAAG | 24 MAERZ 1993 | Kathryn Y.-P. Miao |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

# EUROPÄISCHER RECHERCHENBERICHT

Nummer der Anmeldung

EP 92 11 9258
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | PATENT ABSTRACTS OF JAPAN vol. 16, no. 144 (C-927)(5187) 10. April 1992 & JP-A-40 04 249 ( MITSUBISHI RAYON CO LTD ) 8. Januar 1992 * Zusammenfassung * | 1-3 | |

-----

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 24 MAERZ 1993 | Kathryn Y.-P. Miao |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)